# EUROPÄISCHE PATENTSCHRIFT

(11) **EP 2 034 142 B1**
(45) Veröffentlichungstag und Bekanntmachung des Hinweises auf die Patenterteilung: **08.12.2010**
(21) Anmeldenummer: 08163539.3
(22) Anmeldetag: 03.09.2008
(51) Int. Cl.: F01M 13/00, F01M 13/02, F16F 9/34

(54) **Druckregelventil, insbesondere für Kurbelgehäuseentlüftung**
Pressure regulating valve, in particular for crankcase ventilation
Soupape de réglage de pression, en particulier pour l'aération d'un carter

(30) Priorität: 05.09.2007 DE 102007042054
(43) Veröffentlichungstag der Anmeldung: 11.03.2009
(73) Patentinhaber: Mahle International GmbH, 70376 Stuttgart (DE)
(72) Erfinder: Conze, Michael, 72072 Tübingen (DE)
(74) Vertreter: BRP Renaud & Partner

(56) Entgegenhaltungen:
- EP-A- 0 471 142
- EP-A- 0 698 738
- WO-A-2005/108835
- US-A- 3 967 605

## Beschreibung

Die vorliegende Erfindung betrifft ein Druckregelventil, insbesondere zur Regelung eines Drucks in einem Kurbelgehäuse eines Kolbenmotors. Die Erfindung betrifft außerdem einen Kolbenmotor mit einem derartigen Druckregelventil sowie eine Rückstellfeder für ein derartiges Druckregelventil.

Druckregelventile, mit deren Hilfe der Druck in einem Volumen auf einen bestimmten Zielwert eingeregelt werden kann, kommen bei vielfältigen Anwendungen zum Einsatz. Bei Kraftfahrzeugen bzw. bei Kolbenmotoren kommen derartige Druckregelventile z.B. zur Regelung des Drucks im Kurbelgehäuse zum Einsatz. Im Kurbelgehäuse soll gegenüber der Umgebung ein vorbestimmter Unterdruck herrschen, um Schadstoffemissionen in die Umgebung zu vermeiden. Der Unterdruck darf nicht zu groß sein, um die Dichtungen des Kurbelgehäuses nicht zu gefährden. Im Betrieb des Kolbenmotors gelangen permanent sog. Blowby-Gase in das Kurbelgehäuse, was zu einer Druckerhöhung im Kurbelgehäuse führen würde. Über das Druckregelventil wird somit im Betrieb des Kolbenmotors permanent Gas abgeführt, um den gewünschten Unterdruck im Kurbelgehäuse aufrechterhalten zu können. Bei derartigen durchströmten Druckregelventilen wird das Regelverhalten einerseits durch die statische Druckdifferenz zwischen dem einzuregelnden Solldruck und dem aktuell vorliegenden Istdruck und andererseits durch dynamische Effekte bestimmt, die sich durch die Gasströmung ergeben. Bei schließendem Ventil bzw. in einem den Schließzustand beinhaltenden Randbereich der Ventilstellungen überwiegen die dynamischen Einflüsse, die das Ventil verstärkt in die Schließstellung antreiben. Sobald das Ventil geschlossen ist, gehen die dynamischen Schließkräfte abrupt auf den Wert Null zurück. Da die statischen Schließkräfte dann regelmäßig nicht ausreichen, das Ventil in der Schließstellung zu halten, öffnet es wieder, was erneut die Ausbildung der dynamischen Schließkräfte ermöglicht. In diesem Randbereich der Ventilbetätigungen kann es somit zu einem sog. "Flattern" des Ventils kommen. Dieses Flattern entsteht u.a. dadurch, dass die üblicherweise verwendeten Rückstellfedern eine lineare Kennlinie aufweisen, die im wesentlichen nur auf die statischen Stellkräfte ausgelegt ist.

Aus der DE 10 2006 016 473 A1 ist ein Druckregelventil bekannt, das eine elektrisch betätigbare, also aktive Vorsteuerstufe und eine passive Regelstufe aufweist. Die Regelstufe umfasst einen mit einer Blende versehenen Regelkolben mit zwei stirnseitigen Kolbendichtflächen, die in Abhängigkeit von der Schaltstellung der Vorsteuerstufe entweder an zwei im Bereich der Stirnfläche des Gehäuses angeordneten Dichtsitzen druckmitteldicht anliegen oder von diesen Dichtsitzen abgehoben sind, um entweder einen Ventileinlass von einem Ventilauslass zu trennen oder um den Ventileinlass mit dem Ventilauslass zu verbinden. Eine Druckfeder dient zur Positionierung des Regelkolbens in dessen Grundstellung. Außerdem ist zwischen der zweiten Kolbendichtfläche und dem zweiten Dichtsitz ein elastisches Element in Form einer federelastischen, zentral offenen Scheibe angeordnet, das der Druckfeder entgegenwirkt. Das bekannte Druckregelventil dient zur variablen Verstellung der Dämpferkennlinie eines Schwingungsdämpfers, insbesondere eines Fahrzeugstoßdämpfers.

Weitere Druckregelventile sind aus der WO 2005/108835 A, aus der EP 0 698 738 A, aus der US 3,967,605 A und aus der EP 0 471 142 A bekannt.

Die vorliegende Erfindung beschäftigt sich mit dem Problem, für ein Druckregelventil der eingangs genannten Art bzw. für einen mit einem solchen Druckregelventil ausgestatteten Kolbenmotor bzw. für eine für ein derartiges Druckregelventil vorgesehene Rückstellfeder eine verbesserte Ausführungsform anzugeben, die sich insbesondere dadurch auszeichnet, dass sie preiswert realisierbar ist und die Neigung des Ventils zum Flattern reduziert.

Dieses Problem wird erfindungsgemäß durch die Gegenstände der unabhängigen Ansprüche gelöst. Vorteilhafte Ausführungsformen sind Gegenstand der abhängigen Ansprüche.

Die-Erfindung beruht auf dem allgemeinen Gedanken, die Rückstellfeder mit Federbeinen auszustatten, die sich jeweils an einer Anlagefläche abstützen, wobei die Federbeine bzw. die jeweilige Anlagefläche so geformt sind, dass sich ein wirksamer Hebelarm, mit dem sich das jeweilige Federbein an der jeweiligen Anlagefläche abstützt, mit schließendem Ventil verkürzt bzw. mit öffnendem Ventil verlängert. Hierdurch wird für das schließende Ventil eine progressive Federkennlinie realisiert, d.h., die dem Schließvorgang entgegenwirkende Rückstellkraft der Rückstellfeder nimmt mit fortschreitendem Schließvorgang stärker als linear, also überproportional zu. Durch die progressive Federkennlinie lassen sich die im Schließbereich des Ventils stark zunehmenden dynamischen Strömungskräfte stärker berücksichtigen, wodurch die Neigung des Ventils zum Flattern reduziert ist. Gleichzeitig lässt sich eine derartige Formgebung bei der Rückstellfeder bzw. bei der jeweiligen Anlagefläche während der Herstellung des Ventils einfach und somit kostengünstig berücksichtigen.

Die gewünschte progressive Federkennlinie kann beispielsweise dadurch realisiert werden, dass die Federbeine zur jeweiligen Anlagefläche hin konvex gekrümmt sind, während die jeweilige Anlagefläche eben oder kegelstumpfförmig ist. Alternativ lässt sich die progressive Kennlinie auch dadurch realisieren, dass die Federbeine an sich eben sind, jedoch gegenüber einem Zentralbereich der Rückstellfeder, von dem die Federbeine ausgehen, abgewinkelt sind, während gleichzeitig die jeweilige Anlagefläche zum jeweiligen Federbein hin konvex gekrümmt ist. Alternativ ist es ebenso möglich, die Federbeine zur jeweiligen Anlagefläche hin konvex zu krümmen und die jeweilige Anlageflächen zum jeweiligen Federbein hin konvex oder konkav zu krümmen. Derartige Formgebungen lassen sich ohne weiteres während der Herstellung der Rückstellfeder bzw. während der Herstellung eines die jeweilige Anlagefläche aufweisenden Gehäuses des Druckregelventils berücksichtigen.

Bei einer bevorzugten Ausführungsform kann der Zentralbereich der Rückstellfeder durch einen ebenen und plattenförmigen Körper gebildet sein, der ein mit dem Auslass zusammenwirkendes Ventilglied bildet. Der Zentralbereich ist auf geeignete Weise mit einer den Ventilraum von einem Referenzdruckraum trennenden Membran verbunden und kann so durch die Membran betätigt werden. Bei dieser Ausführungsform übernimmt somit die Rückstellfeder die Funktion eines Ventilglieds. Insoweit besitzt sie eine Doppelfunktion.

Bei einer anderen Ausführungsform kann der Zentralbereich einen Ring bilden, der eine zentrale Öffnung aufweist. Dieser Ring umschließt dabei einen Bereich der Membran, an welcher er abgestützt ist. Dieser vom Ring umschlossene Membranbereich bildet bei dieser Ausführungsform ein mit dem Auslass zusammenwirkendes Ventilglied. Bei dieser Variante übernimmt somit die Membran die Funktion des Ventilglieds.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine schaltplanartige Prinzipdarstellung eines Kolbenmotors mit Druckregelventil,
- Fig. 2: eine stark vereinfachte Schnittdarstellung eines Druckregelventils,
- Fig. 3: eine Draufsicht auf eine Rückstellfeder,
- Fig. 4: eine Ansicht wie in Fig. 3, jedoch bei einer anderen Ausführungsform,
- Fig. 5: vereinfachte Seitenansichten des Druckregelventils im Bereich der Rückstellfeder bei unterschiedlichen Regelzuständen a und b,
- Fig. 6: Ansichten wie in Fig. 5, jedoch bei einer anderen Ausführungsform,
- Fig. 7: Ansichten wie in den Fig. 5 und 6, jedoch bei einer weiteren Ausführungsform.

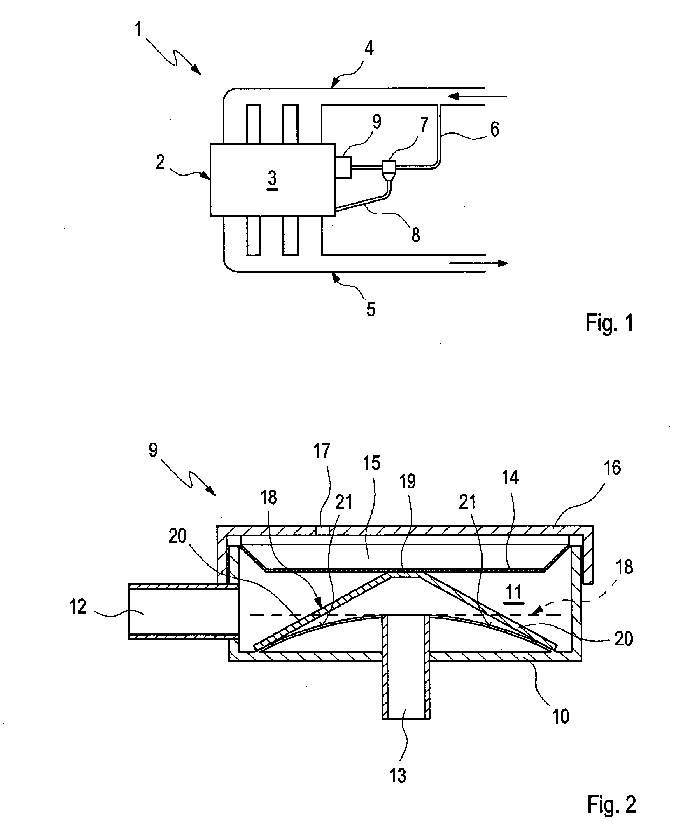

Entsprechend Fig. 1 umfasst ein Kolbenmotor 1 einen Motorblock 2, der ein Kurbelgehäuse 3 enthält. Der Motor 1 weist eine Frischgasanlage 4 auf, die hier nicht gezeigte Brennräume des Kolbenmotors 1 mit Frischgas versorgt. Eine Abgasanlage 5 führt Verbrennungsabgase der Brennräume vom Motorblock 2 ab. Zur Entlüftung des Kurbelgehäuses 3 ist eine Entlüftungsleitung 6 vorgesehen, die das Kurbelgehäuse 3 mit der Frischgasanlage 4 kommunizierend verbindet. Durch den Unterdruck in der Frischgasanlage 4 bildet die Frischgasanlage 4 eine Drucksenke, die es ermöglicht, Blowby-Gase aus dem Kurbelgehäuse 3 abzusaugen. In der Entlüftungsleitung 6 kann ein Ölabscheider 7 angeordnet sein, z.B. eine Zentrifuge oder ein Zyklon, um dem abgesaugten Blowby-Gas mitgeführte Ölrückstände zu entziehen und diese über eine Rückführleitung 8 dem Kurbelgehäuse 3 bzw. einem Ölsumpf bzw. einer Ölwanne des Motorblocks 2 zuzuführen. Damit der Druck im Kurbelgehäuse 3 nicht unter einen vorbestimmten Grenzdruck absinken kann, ist ein Druckregelventil 9 vorgesehen. Dieses kann grundsätzlich an beliebiger Stelle innerhalb der Entlüftungsleitung 6 angeordnet sein. Im gezeigten Beispiel ist das Druckregelventil 9 am Motorblock 2 angeordnet, so dass die Entlüftungsleitung 6 über das Druckregelventil 9 an das Kurbelgehäuse 3 angeschlossen ist.

Entsprechend Fig. 2 umfasst das Druckregelventil 9 ein Gehäuse 10, das in seinem Inneren einen Ventilraum 11 aufweist. Insoweit umschließt das Gehäuse 10 den Ventilraum 11. Das Ventil 9 weist einen Einlass 12 auf, der hier nach Art eines Stutzens am Gehäuse 10 ausgebildet ist. Der Einlass 12 kommuniziert mit dem Ventilraum 11 und ist an ein Volumen anschließbar, das hinsichtlich seines Drucks geregelt werden soll. Im Beispiel gemäß Fig. 1 kommuniziert der Einlass 12 mit dem Kurbelgehäuse 3. Im Beispiel bildet somit das Kurbelgehäuse 3 das hinsichtlich seines Drucks zu regelnde Volumen. Ferner weist das Ventil 9 einen Auslass 13 auf, der hier ebenfalls in Form eines Stutzens am Gehäuse 10 ausgebildet ist. Der Auslass 13 kommuniziert ebenfalls mit dem Ventilraum 11 und ist an eine Drucksenke anschließbar. Im Beispiel der Fig. 1 bildet die Frischgasanlage 4 diese Drucksenke. Demnach ist im Beispiel die Entlüftungsleitung 6 an den Auslass 13 angeschlossen.

Das Ventil 9 weist hier außerdem eine Membran 14 auf, die den Ventilraum 11 von einem Referenzdruckraum 15 gasdicht trennt. Die Membran 14 ist flexibel und elastisch verformbar und kann bevorzugt aus einem Kunststoff hergestellt sein. Der Referenzdruckraum 15 ist mit einem Referenzdruck beaufschlagbar, der im Beispiel gemäß Fig. 1 durch den atmosphärischen Umgebungsdruck gebildet ist. Das Gehäuse 10 kann einen Deckel 16 aufweisen, der am Gehäuse 10 so anbringbar ist, dass er den Referenzdruckraum 15 verschließt. Um den Referenzdruckraum 15 nun mit dem Referenzdruck, also hier mit Umgebungsdruck, beaufschlagen zu können, kann grundsätzlich ein geeigneter Referenzdruckpfad vorgesehen sein. Ein solcher Referenzdruckpfad kann beispielsweise durch wenigstens eine in den Deckel 16 eingearbeitete Öffnung 17 gebildet sein. Ebenso kann der Deckel 16 eine Perforation oder dergleichen aufweisen. Zusätzlich oder alternativ kann der Deckel 16 gegenüber dem Gehäuse 10 eine gewisse Leckage aufweisen, so dass beispielsweise ein hinreichender Druckausgleich durch den Überlappungsbereich zwischen Deckel 16 und Gehäuse 10 erfolgen kann.

Das Ventil 9 ist ferner mit einer Rückstellfeder 18 ausgestattet, die im Ventilraum 11 angeordnet ist. Die Rückstellfeder 18 stützt sich dabei einerseits an der Membran 14 und andererseits am Gehäuse 10 ab. Die Rückstellfeder 18 weist einen Zentralbereich 19 auf, der sich an der Membran 14 abstützt. Ferner weist die Rückstellfeder 18 mehrere Federbeine 20 auf, die vom Zentralbereich 19 ausgehen und die sich jeweils an einer Anlagefläche 21 abstützen. Die jeweilige Anlagefläche 21 ist hier am Gehäuse 10 ausgebildet, kann jedoch auch an einem separaten Einlegeteil ausgebildet sein. ist. In Fig. 2 sind zwei Extremstellungen der Rückstellfeder 18 wiedergegeben, die zwei Extremzuständen des Ventils 9 zugeordnet sind. Die Rückstellfeder 18 ist zum einen mit durchgezogener Linie entsprechend einem Offenzustand des Ventils 9 dargestellt. Zum anderen ist die Rückstellfeder 18 mit unterbrochener Linie entsprechend dem Schließzustand des Ventils 9 wiedergegeben.

Bei den Schnittansichten der Fig. 2, 5, 6 und 7 ist der Schnitt durch die Rückstellfeder 18 durch zwei Federbeine 20 gelegt.

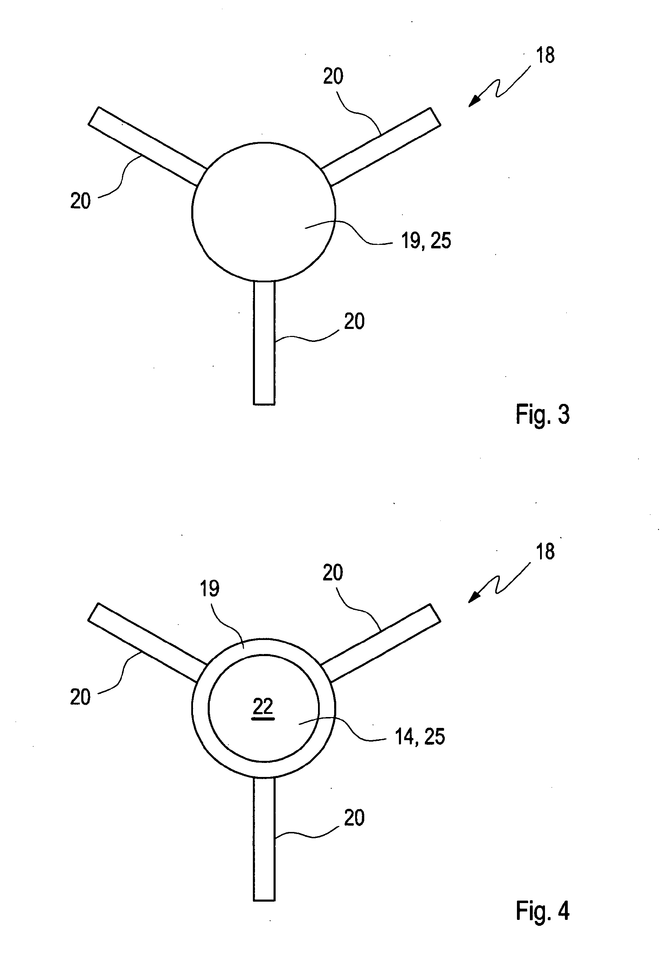

Der Zentralbereich 19 der Rückstellfeder 18 kann entsprechend Fig. 3 durch einen ebenen, plattenförmigen und geschlossenen Körper gebildet sein. In diesem Fall bildet der Zentralbereich 19 ein mit dem Auslass 13 zusammenwirkendes Ventilglied 25. Im Unterschied dazu kann gemäß Fig. 4 der Zentralbereich 19 durch einen Ring gebildet sein, der eine zentrale Öffnung 22 enthält. Bei an der Membran 14 anliegendem ringförmigen Zentralbereich 19 umschließt dieser Ring einen nicht näher bezeichneten kreisförmigen Bereich der Membran 14. Dieser Membranbereich bildet dann ein mit dem Auslass 13 zusammenwirkendes Ventilglied 25. Beide Ausführungsformen haben Vorteile. Die geschlossene Variante gemäß Fig. 3 kann sich durch eine bessere Lebenszeit auszeichnen, da der Zentralbereich 19 verschleißfester ausgestaltet werden kann als die Membran 14. Im Unterschied dazu kann die Membran 14 bei der offenen Varianten gemäß Fig. 4 eine bessere Dichtungswirkung entfalten.

Bevorzugt ist die Rückstellfeder 18 mit dem Zentralbereich 19 und mit den davon ausgehenden Federbeinen 20 aus einem Stück, also integral hergestellt. Vorzugsweise besteht die Rückstellfeder 18 aus einem geeigneten Federmaterial, insbesondere Federstahl. In den gezeigten Beispielen der Fig. 3 und 4 weist die Rückstellfeder 18 jeweils drei Federbeine 20 auf, die in der Umfangsrichtung gleichmäßig verteilt angeordnet sind. Es ist klar, dass grundsätzlich auch eine Ausführungsform mit nur zwei Federbeinen 20, die insbesondere diametral gegenüberliegend angeordnet sind, vorgesehen sein kann. Ebenso sind Ausführungsformen mit mehr als drei Federbeinen 20 denkbar, bei denen die Federbeine 20 zweckmäßig ebenfalls gleichmäßig in Umfangsrichtung verteilt angeordnet sind.

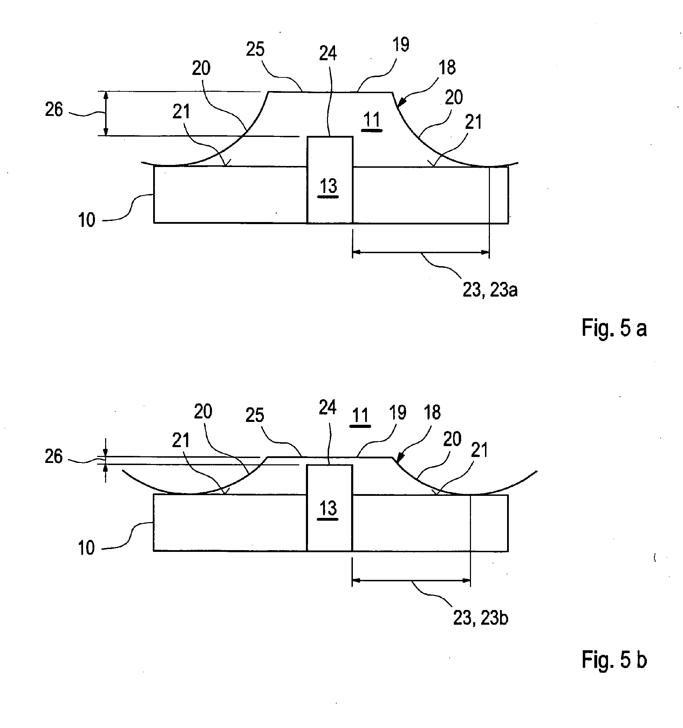

Entsprechend den Fig. 5 bis 7 erfolgt die Formgebung der Federbeine 20 und/oder der jeweiligen Anlagefläche 21 so, dass sich ein Hebelarm 23 hinsichtlich seiner Länge in Abhängigkeit des Schließzustands des Ventils 9 verändert. Der Hebelarm 23 wirkt zwischen dem Zentralbereich 19 und der jeweiligen Anlagefläche 21. Der jeweilige Hebelarm 23 erstreckt sich dabei vom Übergang zwischen Zentralbereich 19 und Federbein 20 bis zur Kontaktstelle zwischen Federbein 20 und Anlagefläche 21. Der Öffnungs- oder Schließgrad des Ventils 9 repräsentiert sich durch den senkrechten Abstand 26 zwischen einer dem Ventilraum 11 zugewandten Öffnung 24 des Auslasses 13 und dem jeweiligen Ventilglied 25, das bei der Ausführungsform gemäß Fig. 3 durch den Zentralbereich 19 und bei der Ausführungsform gemäß Fig. 4 durch die Membran 14 gebildet ist. Dabei ist der Zusammenhang zwischen der Länge des Hebelarms 23 und dem Öffnungs- oder Schließgrad des Ventils 9 so, dass der wirksame Hebelarm 23 mit schließendem Ventil 9 kürzer wird. Die Fig. 5a, 6a und 7a zeigen jeweils einen Offenzustand des Ventil 9 bzw. einen vergleichsweise weit geöffneten Zustand des Ventils 9. Dementsprechend liegt hier ein vergleichsweise langer Hebelarm 23a vor. Im Unterschied dazu zeigen die Fig. 5b, 6b, 7b einen vergleichsweise weit geschlossenen Zustand des Ventils 9 bzw. den Schließzustand des Ventils 9, bei dem sich ein vergleichsweise kurzer Hebelarm 23b einstellt. Der jeweils wirksame Hebelarm 23 bestimmt die Rückstellkräfte der Rückstellfeder 18. Mit abnehmendem Hebelarm 23 vergrößern sich die Rückstellkräfte, wodurch eine progressive Federkennlinie entsteht.

Die in den Fig. 5a und 5b gezeigte Ausführungsform charakterisiert sich dadurch, dass die Federbeine 20 zur jeweiligen Anlagefläche 21 hin jeweils konvex gekrümmt sind, während die jeweilige Anlagefläche 21 eben ausgestaltet ist. In diesem Beispiel liegen die Anlageflächen 21 in einer gemeinsamen Ebene, die senkrecht zum Abstand 26 und somit senkrecht zum Hub des Ventilglieds 25 orientiert ist. Grundsätzlich kann für jedes Federbein 20 eine separate Anlagefläche 21 vorgesehen sein. Ebenso ist eine gemeinsame Anlagefläche 21 für sämtliche Federbeine 20 denkbar. Beispielsweise könnte diese gemeinsame Anlagefläche 21 hier durch eine den Auslass 13 umschließende, ebene Ringfläche gebildet sein.

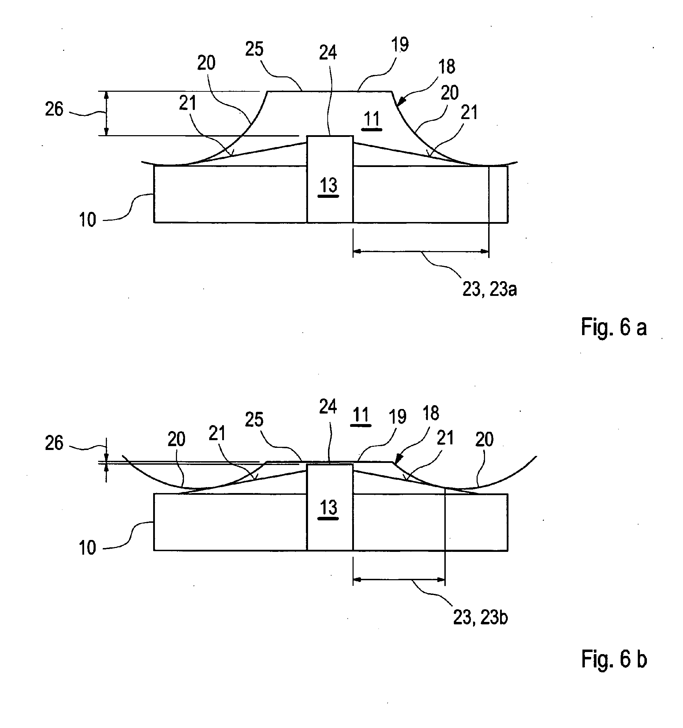

Die in den Fig. 6a und 6b gezeigte Ausführungsform unterscheidet sich von der in den Fig. 5a und 5b gezeigten Ausführungsform dadurch, dass sich die einzelnen Anlageflächen 21 in einer gegenüber der Hubrichtung des Ventilglieds 25 geneigten Ebene erstrecken. Sofern auch hier eine gemeinsame Anlagefläche 21 für alle Federbeine 20 vorgesehen ist, ist diese kegelstumpfförmig ausgestaltet. In ihrem Zentrum enthält diese kegelstumpfförmige Anlagefläche 21 die Öffnung 24 des Auslasses 13. Erkennbar ist bei den in den Fig. 6a und 6b gezeigten Ausführungsform die Abhängigkeit des Hebelarms 23 vom Abstand 26 zwischen Ventilglied 25 und Auslassöffnung 24, also die Abhängigkeit vom Schließzustand des Ventils 9 stärker ausgeprägt als bei der in den Fig. 5a und 5b gezeigten Ausführungsform.

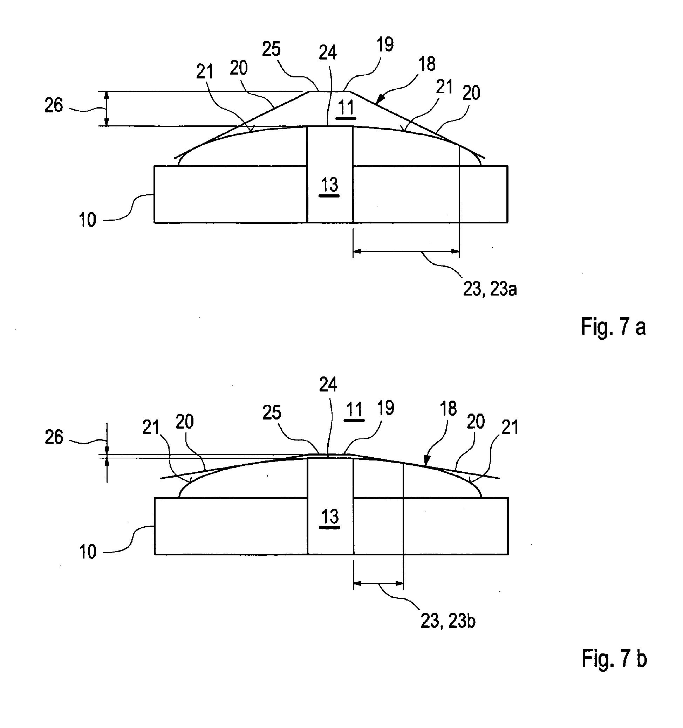

Bei der in den Fig. 7a und 7b gezeigten Ausführungsform, die auch der in Fig. 2 gezeigten Ausführungsform entspricht, sind die Federbeine 20 jeweils eben ausgestaltet, jedoch gegenüber dem Zentralbereich 19 abgewinkelt und von der Membran 14 weggerichtet. Desweiteren sind die separaten Anlageflächen 21 bzw. ist die gemeinsame Anlagefläche 21 zum jeweiligen Federbein 20 hin konvex gekrümmt. Sofern eine gemeinsame Anlagefläche 21 vorgesehen ist, besitzt diese eine sphärische Kontur, die zentral die Auslassöffnung 24 umschließt. Erkennbar kann dadurch ebenfalls der Einfluss auf die Abhängigkeit der Hebelarmlänge vom Öffnungs- und Schließgrad des Ventils 9 beeinflusst werden. Im Beispiel ist die Differenz zwischen dem langen Hebelarm 23a im Offenzustand gemäß Fig. 7a zum kurzen Hebelarm 23b im Schließzustand gemäß Fig. 7b deutlich größer als bei den zuvor beschriebenen Ausführungsformen der Fig. 5 und 6.

Eine weitere Steigerung dieses progressiven Zusammenhangs kann beispielsweise dadurch erreicht werden, dass bei konvexen Anlageflächen 21 außerdem die Federbeine 20 konvex ausgestaltet werden.

Im Grunde können weitere Varianten dadurch gebildet werden, dass sowohl die Federbeine 20 als auch die jeweilige Anlagefläche 21 gekrümmt sind. Dabei können die Federbeine 20 zur jeweiligen Anlagefläche hin konvex oder konkav gekrümmt sein, während die jeweilige Anlagefläche 21 zum jeweiligen Federbein hin konvex oder konkav gekrümmt sein kann.

## Patentansprüche

1. Rückstellfeder für ein Druckregelventil (1), insbesondere zur Regelung eines Drucks in einem Kurbelgehäuse (3) eines Kolbenmotors (1), wobei das Druckregelventil (1) umfasst:
- ein Gehäuse (10), das einen Ventilraum (11) umschließt,
- einen mit dem Ventilraum (11) kommunizierenden Einlass (12), an den ein hinsichtlich des Drucks zu regelndes Volumen (3) anschließbar ist,
- einen mit dem Ventilraum (11) kommunizierenden Auslass (13), an den eine Drucksenke (4) anschließbar ist,
- eine den Ventilraum (11) von einem mit einem Referenzdruck beaufschlagbaren Referenzdruckraum (15) trennenden Membran (14),
- wobei sich die im Ventilraum (11) angeordnete Rückstellfeder (18) einerseits an der Membran (14) und andererseits am Gehäuse (10) abstützt,
- wobei die Rückstellfeder (18) einen sich an der Membran (14) abstützenden Zentralbereich (19) und mehrere Federbeine (20) aufweist, die vom Zentralbereich (19) ausgehen und sich jeweils an einer Anlagefläche (21) abstützen,
- wobei die Federbeine (20) und/oder die jeweilige Anlagefläche (21) so geformt sind, dass sich ein zwischen dem Zentralbereich (19) und der jeweiligen Anlagefläche (21) wirksamer Hebelarm (23) mit schließendem Ventil (9) verkürzt.

2. Rückstellfeder nach Anspruch 1,
**dadurch gekennzeichnet,**
**dass** die Federbeine (20) zur jeweiligen Anlagefläche (21) hin konvex gekrümmt sind, während die jeweilige Anlagefläche (21) eben oder kegelstumpfförmig ist.

3. Rückstellfeder nach Anspruch 1,
**dadurch gekennzeichnet,**
**dass** die Federbeine (20) eben und gegenüber dem Zentralbereich (19) abgewinkelt sind, während die jeweilige Anlagefläche (21) zum jeweiligen Federbein (20) hin konvex gekrümmt ist.

4. Rückstellfeder nach Anspruch 1,
**dadurch gekennzeichnet,**
**dass** die Federbeine (20) und die jeweilige Anlagefläche (21) gekrümmt sind, wobei insbesondere die Federbeine (20) zur jeweiligen Anlagefläche (21) hin konvex oder konkav gekrümmt sind, während die jeweilige Anlagefläche (21) zum jeweiligen Federbein hin konvex oder konkav gekrümmt ist.

5. Rückstellfeder nach einem der Ansprüche 1 bis 4,
**dadurch gekennzeichnet,**
**dass** der Zentralbereich (19) ein ebener, plattenförmiger Körper ist, der ein mit dem Auslass (13) zusammenwirkendes Ventilglied (25) bildet.

6. Rückstellfeder nach einem der Ansprüche 1 bis 4,
**dadurch gekennzeichnet,**
**dass** der Zentralbereich (19) ein Ring mit einer zentralen Öffnung (22) ist, wobei ein vom Ring umschlossener Membranbereich ein mit dem Auslass (13) zusammenwirkendes Ventilglied (25) bildet.

7. Rückstellfeder nach einem der Ansprüche 1 bis 6,
**dadurch gekennzeichnet,**
**dass** die Rückstellfeder (18) mit dem Zentralbereich (19) und den Federbeinen (20) aus einem Stück hergestellt ist.

8. Druckregelventil, insbesondere zur Regelung eines Drucks in einem Kurbelgehäuse (3) eines Kolbenmotors (1),
- mit einem Gehäuse (10), das einen Ventilraum (11) umschließt,
- mit einem mit dem Ventilraum (11) kommunizierenden Einlass (12), an den ein hinsichtlich des Drucks zu regelndes Volumen (3) anschließbar ist,
- mit einem mit dem Ventilraum (11) kommunizierenden Auslass (13), an den eine Drucksenke (4) anschließbar ist,
- mit einer den Ventilraum (11) von einem mit einem Referenzdruck beaufschlagbaren Referenzdruckraum (15) trennenden Membran (14),
- mit einer im Ventilraum (11) angeordneten, sich einerseits an der Membran (14) und andererseits am Gehäuse (10) abstützenden Rückstellfeder (18) nach einem der Ansprüche 1 bis 7.

9. Druckregelventil nach Anspruch 8,
**dadurch gekennzeichnet,**
**dass** das Gehäuse (10) einen Deckel (16) aufweist, der den Referenzdruckraum (15) verschließt, wobei zur Beaufschlagung des Referenzdruckraums (15) mit Referenzdruck ein Referenzdruckpfad (17) oder eine Leckage zwischen Gehäuse (10) und Deckel (16) vorgesehen ist.

10. Kolbenmotor, insbesondere in einem Kraftfahrzeug,
- mit einem Kurbelgehäuse (3),
- mit einer Frischgasanlage (4) zur Versorgung von Brennräumen des Kolbenmotors (1) mit Frischgas,
- mit einem Druckregelventil (9) nach Anspruch 8 oder 9, dessen Einlass (12) an das Kurbelgehäuse (3) angeschlossen ist, dessen Auslass (13) an die Frischgasanlage (4) angeschlossen ist und dessen Referenzdruckraum (15) mit der Umgebung kommuniziert.

## Claims

1. A return spring for a pressure regulating valve (9), in particular for regulating a pressure in a crankcase (3) of a piston engine (1), the pressure regulating valve (9) comprising:
- a housing (10) which encloses a valve chamber (11),
- an inlet (12) which communicates with the valve chamber (11) and to which a volume (3) can be connected, which volume is to be regulated with respect to the pressure,
- an outlet (13) which communicates with the valve chamber (11) and to which outlet a pressure sink (4) can be connected,
- a membrane (14) which separates the valve chamber (11) from a reference pressure chamber (15) which can be pressurized with a reference pressure,
- wherein the return spring (18) arranged in the valve chamber (11) is supported on the one side on the membrane (14) and on the other on the housing (10),
- wherein the return spring (18) has a central area (19) which is supported on the membrane (14) and a plurality of spring struts (20) which extend from the central area (19) and which each are supported on a contact face (21),
- wherein the spring struts (20) and/or the respective contact face (21) are formed in such a manner that a moment arm (23) acting between the central area (19) and the respective contact face (21) shortens when the valve (9) closes.

2. The return spring according to claim 1,
**characterized in**
**that** the spring struts (20) are curved in a convex manner towards the respective contact face (21), whereas the respective contact face (21) is planar or truncated cone-shaped.

3. The return spring according to claim 1,
**characterized in**
**that** the spring struts (20) are planar and angled with respect to the central area (19), whereas the respective contact face (21) is curved in a convex manner towards the respective spring strut (20).

4. The return spring according to claim 1,
**characterized in**
**that** the spring struts (20) and the respective contact face (21) are curved, wherein in particular the spring struts (20) are curved in a convex or concave manner towards the respective contact face (21), whereas the respective contact face (21) is curved in a convex or concave manner towards the respective spring strut.

5. The return spring according to any one of the claims 1 to 4,
**characterized in**
**that** the central area (19) is a planar, plate-shaped body which forms a valve member (25) that interacts with the outlet (13).

6. The return spring according to any one of the claims 1 to 4,
**characterized in**
**that** the central area (19) is a ring with a central opening (22), wherein a membrane area enclosed by the ring forms a valve member (25) that interacts with the outlet (13).

7. The return spring according to any one of claims 1 to 6,
**characterized in**
**that** the return spring (18) together with the central area (19) and the spring struts (20) is made from one piece.

8. A pressure regulating valve, in particular for regulating a pressure in a crankcase (3) of a piston engine (1),
- with a housing (10) which encloses a valve chamber (11),
- with an inlet (12) which communicates with the valve chamber (11) and to which a volume (3) can be connected, which volume is to be regulated with respect to the pressure,
- with an outlet (13) which communicates with the valve chamber (11) and to which outlet a pressure sink (4) can be connected,
- with a membrane (14) which separates the valve chamber (11) from a reference pressure chamber (15) which can be pressurized with a reference pressure,
- with a return spring (18) according to any one of the claims 1 to 7 which is arranged in the valve chamber (11) and is supported on the one side on the membrane (14) and on the other side on the housing (10).

9. The pressure regulating valve according to claim 8,
**characterized in**
**that** the housing (10) has a cover (16) which closes the reference pressure chamber (15), wherein for pressurizing the reference pressure chamber (15) with reference pressure, a reference pressure path (17) or a leakage between housing (10) and cover (16) is provided.

10. A piston engine, in particular in a motor vehicle,
- with a crankcase (3)
- with a fresh gas system (4) for supplying combustion chambers of the piston engine (1) with fresh gas,
- with a pressure regulating valve (9) according to claim 8 or claim 9, the inlet (12) of which is connected to the crankcase (3) and the outlet (13) of which is connected to the fresh gas system (4), and the reference pressure chamber (15) of which communicates with the environment.

## Revendications

1. Ressort de rappel élastique pour soupape de réglage de la pression (1), notamment pour le réglage d'une pression dans un carter (3) d'un moteur à pistons (1), dans lequel la soupape de réglage de la pression (1) comprend :
- un logement (10), qui enveloppe une chambre de soupape (11),
- une admission (12) communiquant avec la chambre de soupape (11), à laquelle peut être raccordée un volume (3) à régler en ce qui concerne la pression,
- un échappement (13) communiquant avec la chambre de soupape (11), auquel un puits de pression (4) peut être raccordé,
- une membrane (14) séparant la chambre de soupape (11) d'une chambre de pression de référence (15) pouvant être sollicitée par une pression de référence,
- dans lequel le ressort de rappel élastique (18) disposé dans la chambre de soupape (11) s'appuie d'une part sur la membrane (14) et d'autre part sur le logement (10),
- dans lequel le ressort de rappel élastique (18) présente une zone centrale (19) s'appuyant sur la membrane et plusieurs jambes de ressort, qui partent de la zone centrale (19) et s'appuient respectivement sur une surface d'immobilisation (21),
- dans lequel les jambes de ressort (20) et/ou la surface d'immobilisation (21) respective sont formées de telle sorte que un bras de levier (23) opérationnel entre la zone centrale (19) et la surface d'immobilisation respective (21)se raccourcisse à mesure que la soupape (9) se forme.

2. Ressort de rappel élastique selon la revendication 1,
**caractérisé en ce que**
les jambes de ressort (20) sont incurvées de manière convexe par rapport à la surface d'immobilisation (21) respective, alors que la surface d'immobilisation respective (21) est plane ou en forme de cône tronqué.

3. Ressort de rappel élastique selon la revendication 1,
**caractérisé en ce que**
les jambes de ressort (20) sont planes et coudées par rapport à la zone centrale (19), alors que la surface d'immobilisation respective (21) est incurvée de manière convexe par rapport à la jambe de ressort respective (20).

4. Ressort de rappel élastique selon la revendication 1,
**caractérisé en ce que**
les jambes de ressort (20) et la surface d'immobilisation respective (21) sont incurvées, dans lequel particulièrement les jambes de ressort (20) sont incurvées de manière convexe ou concave par rapport à la surface d'immobilisation (21) respective, alors que la surface d'immobilisation respective (21) est incurvée de manière convexe ou concave par rapport à la jambe de ressort respective.

5. Ressort de rappel élastique selon une des revendications 1 à 4,
**caractérisé en ce que**
la zone centrale (19) est un corps plat, en forme de plaque, qui forme un organe de soupape (25) coopérant avec l'échappement (13).

6. Ressort de rappel élastique selon un des revendications 1 à 4,
**caractérisé en ce que**
la zone centrale (19) est une bague comportant une ouverture centrale (22), dans lequel une zone de membrane entourée par la bague forme un organe de soupape (25) coopérant avec l'échappement (13).

7. Ressort de rappel élastique selon une des revendications 1 à 6,
**caractérisé en ce que**
le ressort de rappel élastique (18) est fabriqué en un seul tenant avec la zone centrale (19) et les jambes de ressort (20).

8. Soupape de réglage de la pression, particulièrement pour le réglage d'une pression dans un carter (3) d'un moteur à pistons (1),
- comportant un logement (10), qui enveloppe une chambre de soupape (11),
- comportant une admission (12=) communiquant avec la chambre de soupape (11), à laquelle un volume (3) à régler en ce qui concerne la pression,
- comportant un échappement (13) communiquant avec la chambre de soupape (11), auquel un puits de pression (4) peut être raccordé,
- comportant une membrane (14) séparant la chambre de soupape (11) d'une chambre de pression de référence (15) pouvant être sollicitée par une pression de référence,
- comportant un ressort de rappel élastique (18) disposé dans la chambre de soupape (11), s'appuyant d'un côté sur la membrane (14) et d'autre part sur le logement (10) selon une des revendications 1 à 7.

9. Soupape de réglage de la pression selon la revendication 8,
**caractérisé en ce que**
le logement (10) présente un couvercle (16), qui obture la chambre de pression de référence (15), dans lequel afin de solliciter la chambre de pression de référence (15) avec une pression de référence un trajet de pression de référence (17) ou une fuite entre le logement (10) et le couvercle (16) est prévu.

10. Moteur à pistons, particulièrement dans un véhicule automobile,
- comportant un carter (3),
- comportant une installation de gaz frais (4) pour alimenter des chambres de combustion du moteur à piston (1) avec du gaz frais,
- comportant une soupape de réglage de la pression (9) selon la revendication 8 ou 9, dont l'admission (12) est raccordée au carter (3), dont l'échappement (13) est raccordé à l'installation de gaz frais (4) et dont la chambre de pression de référence (15) communique avec l'environnement ambiant.
